# EUROPÄISCHE PATENTSCHRIFT

(11) **EP 2 797 381 B1**
(45) Veröffentlichungstag und Bekanntmachung des Hinweises auf die Patenterteilung: **09.03.2016**
(21) Anmeldenummer: 13002231.2
(22) Anmeldetag: 26.04.2013
(51) Int. Cl.: H05B 3/50, B60H 1/22, B65D 43/02, B65D 45/00, F24H 1/00, F24H 1/12, F24H 3/04, F24H 9/02, F24H 9/18

(54) **Elektrische Heizvorrichtung und Verfahren zu deren Herstellung**
Electric heating device and method for its production
Dispositif de chauffage électrique et son procédé de fabrication

(43) Veröffentlichungstag der Anmeldung: 29.10.2014
(73) Patentinhaber: Eberspächer catem GmbH & Co. KG, 76863 Herxheim (DE)
(72) Erfinder: Bohlender, Franz, 76870 Kandel (DE); Niederer, Michael, 76889 Kapellen-Drusweiler (DE)
(74) Vertreter: Grünecker Patent- und Rechtsanwälte PartG mbB

(56) Entgegenhaltungen:
- EP-A1- 2 428 747
- EP-A2- 1 348 861
- US-A- 1 529 200
- US-A- 3 072 285
- US-A- 5 104 333
- US-B1- 6 269 772

## Beschreibung

Die vorliegende Erfindung betrifft eine elektrische Heizvorrichtung mit einem Gehäuse, welches eine von einem Medium durchströmbare Zirkulationskammer umschließt, in welche wenigstens eine Heizrippe hineinragt. Die vorliegende Erfindung betrifft insbesondere eine elektrische Heizvorrichtung für ein Kraftfahrzeug. Sie betrifft ferner ein Verfahren zur Herstellung einer solchen Heizvorrichtung.

Eine elektrische Heizvorrichtung der eingangs genannten Art ist beispielsweise aus der DE 196 42 442 A1 bekannt. Diese Druckschrift offenbart eine elektrische Heizvorrichtung mit einem Gehäuseunterteil und einem Gehäusedeckel, der unter Zwischenlage eines Dichtelementes an dem Gehäuseunterteil anliegt. Das Gehäuseunterteil und der Gehäusedeckel sind jeweils als Aluminiumbauteile ausgebildet.

Ein weiterer gattungsbildender Stand der Technik ist mit der auf die vorliegende Anmelderin zurückgehenden EP 2 440 004 A1 gegeben. Diese Druckschrift offenbart in ihrer Figur 7 zwei identisch ausgebildete Gehäuseteile, die unter Zwischenlage einer Dichtlage miteinander verbunden sind und jeweils eine Zirkulationskammer für ein zu erwärmendes Fluid ausbilden.

Dieser vorbekannte Stand der Technik wie auch bei dem Stand der Technik nach DE 196 42 442 A1 offenbart im Kern einen Wasserheizer, d.h. einen Heizer, in dessen Gehäuseunterteil ein flüssiges Medium aufgenommen ist. Das Gehäuseunterteil ist über den Gehäusedeckel abgeschlossen, wobei das Dichtelement eine Leckage an der Fügestelle zwischen dem Gehäuseunterteil und dem Gehäusedeckel verhindert.

Die zuvor beschriebenen und aus dem Stand der Technik bekannten Lösungen lassen noch Wünsche offen. So werden heutzutage insbesondere für Elektrofahrzeuge relativ leistungsfähige elektrische Heizvorrichtungen benötigt. Es besteht einerseits die Notwendigkeit eines kompakten Aufbaus der elektrischen Heizvorrichtung. Die elektrische Heizvorrichtung soll aber nicht nur raumsparend, sondern auch gewichtssparend ausgebildet sein, da insbesondere bei Kraftfahrzeugen das Fahrzeuggewicht einen besonderen Einfluss auf den Kraftstoff- bzw. Stromverbrauch für den Antrieb hat. Des Weiteren wird nach Möglichkeiten gesucht, das Gehäuseunterteil und den dieses verschließenden Deckel möglichst einfach und effektiv zu fügen und die Zirkulationskammer dauerhaft und sicher abzudichten. Bei der Lösung nach der DE 196 42 442 A1 wird der Gehäusedeckel auf das Gehäuseunterteil aufgeschraubt.

In der Kfz-Industrie müssen heutzutage aus Gründen der Qualitätskontrolle Schraubverbindungen besonderen Anforderungen genügen. Üblicherweise wird das Drehmoment beim Festziehen der Schraubverbindung gemessen, um später eventuelle Reklamationen nachverfolgen zu können. Insbesondere bei sicherheitsrelevanten Bauteilen wird des Weiteren das beim Verschrauben des Gehäuses gemessene Drehmoment dokumentiert und archiviert.

Schraubverbindungen haben des Weiteren den Nachteil, dass sie sich aufgrund der Vibration in dem Fahrzeug lösen können. Die gewünschte Dichtigkeit des versiegelten Gehäuses geht dabei verloren. Im Falle eines Wasserheizers kann das in dem Heizkreislauf geführte Medium durch die Leckage austreten, was zu einer Überhitzung des Systems und zu erheblichen Schäden an dem Gesamtsystem führen kann.

Die EP 2 428 747 A1 betrifft einen Luftheizer als elektrische Heizvorrichtung in einem Kraftfahrzeug.

Die US 1 529 200 A betrifft einen Wasserheizer mit einer Vielzahl von Heizrippen, die in ein Gehäuseunterteil hineinragen, welches an gegenüberliegenden Seiten mit Auslaufstutzen versehen ist, um ein flüssiges Medium durch die Heizvorrichtung hindurch zu leiten. Jede einzelne Heizrippe ist mit einem um eine isolierende Platte gewickelten Widerstandsdraht bestückt, der zusammen mit der isolierenden Platte in eine Ausnehmung der Rippe eingebracht ist.

Die EP 1 348 861 offenbart eine elektrische Heizvorrichtung zur Erwärmung von Luft in einer Ansaugleitung einer Brennkraftmaschine. Umgeben von einem metallischen und mit einer seitlichen Öffnung versehenen Haltebügel, der an einem Tragelement aus Aluminium befestigt und von diesem abragt, sind mehrere aus einem gebogenen Blech gebildete Heizelemente vorgesehen. Diese Heizelemente sind gegenüber dem Haltebügel und dem Tragelement durch isolierende Platten aus Mikanit elektrisch isoliert vorgesehen und gegenüber diesen abgestützt. Bei den Heizelementen handelt es sich um elektrische Widerstandselemente, durch welche Strom fließt und die hierdurch erwärmt werden.

Der vorliegenden Erfindung liegt das Problem zugrunde, eine die obigen Nachteile ganz oder teilweise behebende verbesserte elektrische Heizvorrichtung und ein Verfahren zu deren Herstellung anzugeben.

Mit Blick auf die vorrichtungsmäßige Lösung wird mit der vorliegenden Erfindung eine elektrische Heizvorrichtung mit den Merkmalen von Anspruch 1 vorgeschlagen. Die erfindungsgemäße elektrische Heizvorrichtung hat ein wannenförmiges und aus Kunststoff gebildetes Gehäuseunterteil. Das Gehäuseunterteil umschließt im Wesentlichen die Zirkulationskammer. Durch die Ausgestaltung des Gehäuseunterteils aus Kunststoff kann dieses auch bei komplexerer Geometrie sehr kostengünstig und vor allen Dingen relativ gewichtssparend ausgebildet sein. Die Heizrippe ist an einem Gehäusedeckel ausgebildet. Dieser die Zirkulationskammer zumindest einseitig abdeckende und verschließende Gehäusedeckel ist aus einem gut wärmeleitenden Werkstoff geformt, vorzugsweise Kupfer, besonders bevorzugt Aluminium. Auch ein mit gut wärmeleitendem Füllstoff gefüllter Kunststoff ist ein gut wärmeleitender Werkstoff im Sinne der vorliegenden Erfindung. Der Gehäusedeckel eignet sich dementsprechend besonders als Heizungsgehäuse mit der zumindest einen Heizrippe und dem in der Heizrippe und damit dem Heizungsgehäuse aufgenommenen elektrischen Heizelement. Bei dem Heizelement kann es sich um einen Widerstandsheizdraht oder ein PTC-Heizelement handeln.

Bei der erfindungsgemäßen elektrischen Heizvorrichtung sind die unterschiedlichen Funktionen durch unterschiedliche Gehäuseteile ausgeformt. Das in der Regel wannenförmige Gehäuseunterteil dient im Wesentlichen der Definition der Zirkulationskammer. Auf dieses aus Kunststoff und daher sehr leicht ausgebildete Gehäuseteil wird ein üblicherweise aus Aluminium geformter Gehäusedeckel dichtend aufgesetzt, der aufgrund seiner stofflichen Beschaffenheit ohne thermische Schädigung unmittelbar mit dem elektrischen Heizelement der elektrischen Heizvorrichtung in Kontakt stehen kann und gut wärmeleitend ausgebildet ist, um die üblicherweise im Inneren der Heizrippe erzeugte Wärme zu der Außenseite der Heizrippe weiterzuleiten, die üblicherweise in die Zirkulationskammer hineinragt und vom dem daran geführten Medium umflossen wird. Der Gehäusedeckel hat dabei vorzugsweise mehrere, sich im Wesentlichen parallel zueinander erstreckende Heizrippen. Diese öffnen sich jeweils vorzugsweise zu einer identischen Seite, die die Anschlussseite des Gehäusedeckels ausbildet. Über diese Anschlussseite erfolgt der elektrische Anschluss und die elektrische Energieversorgung des der jeweiligen Heizrippe zugeordneten elektrischen Heizelementes. Die Heizrippen öffnen sich üblicherweise zu einer Anschlusskammer, die über eine Trennwand von der Zirkulationskammer getrennt ist. Dort sind die unterschiedlichen elektrischen Heizelemente elektrisch an eine Versorgung angeschlossen, üblicherweise gruppiert. Die Gruppierung der Heizelemente zu einzelnen Heizstufen kann in der in EP 2 440 004 A1 beschriebenen Weise insbesondere über eine Leiterplatte erfolgen. Die Offenbarung der EP 2 440 004 A1 der vorliegenden Anmelderin wird durch Bezugnahme in den Offenbarungsgehalt dieser Anmeldung einbezogen.

Es versteht sich von selbst, dass zwischen dem Gehäusedeckel und dem Gehäuseunterteil üblicherweise zumindest ein Dichtelement vorgesehen ist, über welches die beiden Gehäuseteile gegeneinander abgedichtet sind. Eine solche Ausgestaltung wird jedenfalls dann gewählt, wenn die beiden Gehäuseteile nicht stoffschlüssig miteinander verbunden, beispielsweise verklebt oder verschweißt werden. Aber auch eine solche Klebe- bzw. Schweißverbindung ist für die Verbindung und Abdichtung der beiden Gehäuseteile der erfindungsgemäßen elektrischen Heizvorrichtung denkbar.

Gemäß einer bevorzugten Weiterbildung der vorliegenden Erfindung ist die Heizrippe mit zumindest einer U-förmigen Ausnehmung versehen. Diese öffnet sich zu der bereits beschriebenen und von der Zirkulationskammer getrennten Anschlusskammer. Die U-förmige Ausnehmung nimmt nach der hier diskutierten bevorzugten Weiterbildung ein PTC-Heizelement in sich auf, welches in wärmeleitendem Kontakt an gegenüberliegenden Innenseiten der U-förmigen Ausnehmung anliegt. Diese Weiterbildung kann von einer Ausgestaltung und Anordnung des PTC-Heizelementes in der U-förmigen Ausnehmung Gebrauch machen, wie sie in EP 1 872 986 A1 bzw. EP 2 440 004 A1 der vorliegenden Anmelderin beschrieben ist. Insbesondere PTC-Heizelemente mit einem keilförmig ausgeformten Gehäuse und/oder einem verschieblich daran vorgesehenen Keilelement zum Verklemmen des PTC-Heizelementes in der Ausnehmung sind zu bevorzugen.

Mit Blick auf eine möglichst einfache und innerhalb von Toleranzgrenzen jeweils sicher verwirklichte und abgedichtete Verbindung der beiden Gehäuseteile wird gemäß einer bevorzugten Weiterbildung der vorliegenden Erfindung vorgeschlagen, das Gehäuseunterteil über eine das zuvor bereits erwähnte Dichtelement formschlüssig unter Vorspannung haltende Formschlussverbindung mit dem Gehäusedeckel zu verbinden. Dabei können die die Formschlussverbindung bewirkenden Flächen an dem Gehäuseunterteil bzw. dem Gehäusedeckel bereits bei der Herstellung der beiden Elemente verwirklicht und mit der geforderten Genauigkeit an den jeweiligen Gehäuseteilen vorgesehen sein. Rast- bzw. andere Formschlussverbindungen lassen sich durch angemessene Toleranzgrenzen für die Abmessungen von Gehäuseunterteil und Gehäusedeckel so herstellen, dass die gewünschte Formschlussverbindung und die hier zusammenwirkenden Flächen von Gehäuseunterteil und Gehäusedeckel in vorbestimmter Weise zueinander beabstandet sind bzw. miteinander wirken. Hierdurch kann die auf das Dichtelement wirkende Klemmkraft vorherbestimmt eingestellt werden. Im Gegensatz zu Schraubverbindungen ist das Risiko einer fehlerhaften Montage durch zu geringen Anpressdruck oder einem übermäßigen Anpressdruck beim Verbinden von Gehäuseunterteil und Gehäusedeckel danach ausgeschlossen. Montagefehler können bei der bevorzugten Ausgestaltung üblicherweise nicht zu Dichtigkeitsproblemen an der Fügestelle zwischen Gehäuseunterteil und Gehäusedeckel führen.

Die Formschlussverbindung erfolgt vorzugsweise durch ein längliches, das Gehäuseunterteil und den Gehäusedeckel formschlüssig miteinander verbindendes Formschlusselement.

Das Formschlusselement ist zwischen einander gegenüberliegenden Anlageflächen für das Formschlusselement von Gehäuseunterteil und Gehäuseoberteil vorgesehen. Es kann die besagten Anlageflächen von Gehäuseunterteil und Gehäuseoberteil ein- oder beidseitig überragen, d.h. die entsprechenden Anlageflächen einrahmen und in sich aufnehmen. Es kann aber alternativ auch ebenso gut lediglich ausschließlich zwischen den einander gegenüberliegenden Anlageflächen von Gehäuseunterteil und Gehäusedeckel vorgesehen sein.

Das Formschlusselement liegt ferner an den Anlageflächen unter einer Vorspannkraft an. Diese Vorspannkraft ist durch die Kompression des Dichtelementes bewirkt. Dementsprechend hält das Formschlusselement nicht lediglich die beiden Gehäuseteile, d.h. Gehäuseunterteil und Gehäusedeckel zusammen und legt diese relativ zueinander formschlüssig fest. Das Formschlusselement bewirkt vielmehr auch eine Gegenkraft, die der gewünschten Expansion des Dichtelementes entgegenwirkt und dieses komprimiert hält, so dass die beiden Gehäuseteile unter Zwischenlage des komprimierten Dichtelementes versiegelt gegeneinander festgelegt sind. Dabei wird durch angemessene Anpassung des Formschlusselementes einerseits sowie der Anlageflächen von Gehäuseunterteil und Gehäusedeckel andererseits sowie des Weiteren durch die angemessene Dimensionierung des Dichtelementes dafür Sorge getragen, dass etwaige Fertigungsschwankungen durch unterschiedliche Kompression des Dichtelementes ausgeglichen werden können, ohne das zu befürchten ist, dass die Versiegelung des Gehäuses verloren geht. Versiegelt ist hierbei insbesondere eine zumindest von dem Gehäuseunterteil umgebene Kammer zur Aufnahme beispielsweise des Fluids oder der elektronischen Bauteile.

Das längliche Formschlusselement und damit die gegenüberliegenden Anlageflächen erstreckt sich dabei üblicherweise parallel zu einer Fuge, die zwischen dem Gehäuseunterteil und dem Gehäusedeckel gebildet ist und welche durch das Dichtelement abgedichtet wird. Das Dichtelement läuft dabei in Umfangsrichtung umfänglich und geschlossen um, so dass die durch das Gehäuseunterteil umgebene Kammer gegenüber der Umgebung abgedichtet ist. Das längliche Formschlusselement erstreckt sich dabei üblicherweise lediglich entlang einer einzigen, üblicherweise geradlinig verlaufenden Längswand des Gehäuses. Das längliche Formschlusselement hat dementsprechend vorzugsweise eine geradlinige Ausgestaltung, d.h. verläuft parallel zu der zugeordneten Seitenwand.

Zur Versiegelung des Gehäuses reicht ein einziges längliches Formschlusselement aus. Dieses hat üblicherweise in etwa die Erstreckung entsprechend der Länge der zugeordneten Seitenwand des Gehäuses. An der gegenüberliegenden Seitenwand des Gehäuses kann der Gehäusedeckel mit dem Gehäuseunterteil beispielsweise durch ein Scharnier verbunden sein. Denkbar sind auch Rastverbindungen üblicher Art, durch welcher das Gehäuseunterteil und der Gehäusedeckel an der dem Formschlusselement gegenüberliegenden Seite verbunden sind. Diese Rastverbindungen sollten so ausgestaltet sein, dass eine gewisse Verschwenkbewegung zwischen dem Gehäuseunterteil und dem Gehäusedeckel um die Rastverbindung möglich ist.

Das längliche Formschlusselement kann durch einen einfachen Stab, insbesondere einen Zylinderstab gebildet sein. Auf die Querschnittsform des im wesentlichen zylindrischen Formschlusselementes kommt es nicht so sehr an. Wesentlich ist eine Anpassung des länglichen Formschlusselementes an die Oberflächengestaltung der Anlagefläche.

Das längliche Formschlusselement wird durch die Vorspannkraft des Dichtelementes zwischen den Anlageflächen kraft- bzw. reibschlüssig gehalten. Die hierbei auf das längliche Formschlusselement wirkende Reibkraft verhindert üblicherweise eine Gleitbewegung des länglichen Formschlusselementes in seiner Längsrichtung.

Allerdings werden mit Blick auf die im Fahrzeug herrschenden Vibrationen weitere Maßnahmen vorgeschlagen, die Handhabung des versiegelten Gehäuses beim Schließen und einen dauerhaften Verschluss des versiegelten Gehäuses mit dem Formschlusselement verbessern.

So ist das längliche Formschlusselement vorzugsweise durch sich quer zu dem länglichen Formschlusselement erstreckende Halteflächen formschlüssig gehalten. Diese Halteflächen ragen von den Anlageflächen des Gehäuseunterteils bzw. des Gehäusedeckels ab und befinden sich üblicherweise an der Außenseite des länglichen Formschlusselementes. Dementsprechend wird das längliche Formschlusselement durch die Halteflächen zwischen der Außenwand des Gehäuses und den Halteflächen formschlüssig gehalten.

Die Halteflächen zu dem an dem Gehäuseunterteil vorgesehenen Anlageflächen ragen üblicherweise von dem Gehäuseunterteil in Richtung auf den Gehäusedeckel ab. In entsprechender Weise ragen alternativ oder ergänzend an dem Gehäusedeckel vorgesehene Halteflächen von den zugeordneten Anlageflächen in Richtung auf das Gehäuseunterteil ab. Damit ist eine formschlüssige Aufnahme des länglichen Formschlusselementes in einer Richtung quer zur Längserstreckung desselben bewirkt. Das längliche Formschlusselement ist dementsprechend zwischen den Halteflächen und der Gehäusewand formschlüssig festgelegt.

Der Gehäusedeckel ist vorzugsweise aus einem gut wärmeleitfähigen Material, insbesondere einem Metall und besonders bevorzugt mittels Druckguss hergestellt. Sofern ein solches Gehäuseunterteil aus Kunststoff mit einem Gehäusedeckel aus Aluminium kombiniert und verschlossen wird, ergibt sich ein relativ leichter Aufbau der sich besonders gut für ein gewichtssparendes Gehäuse einer elektrischen Heizvorrichtung in einem Kraftfahrzeug eignet.

Gemäß einer bevorzugten Weiterbildung der vorliegenden Erfindung ist das Formschlusselement in seiner Längsrichtung formschlüssig gehalten. Hierzu kann nach dem Einführen des Formschlusselementes durch Verschieben in seiner Längsrichtung vorund/oder hinter dem länglichen Formschlusselement, d.h. in seiner axialen Verlängerung ein Vorsprung vorgesehen sein oder auch angeordnet werden. Dieser Vorsprung kann durch das Gehäuseunterteil bzw. den Gehäusedeckel ausgebildet werden. Denkbar ist auch die Ausgestaltung durch ein weiteres Bauteil des versiegelten Gehäuses, beispielsweise durch Außenflächen eines Steuergehäuses, welches mit dem Gehäuseunterteil und/oder dem Gehäusedeckel verbunden ist und Steuerkomponenten in sich aufnimmt, die auf in oder auf dem versiegelten Gehäuse vorgesehene Einrichtungen einwirken. Die formschlüssige Halterung kann aber auch durch einen Vorsprung, eine Ausnehmung oder eine Nocke an dem länglichen Formschlusselement gebildet sein, die mit einer Anlagefläche oder einer der Anlagefläche zugeordneten Ausnehmung zusammenwirkt, um das längliche Formschlusselement in Längsrichtung formschlüssig festzulegen.

Gemäß einer bevorzugten Weiterbildung der vorliegenden Erfindung haben das Gehäuseunterteil und der Gehäusedeckel ineinander greifende Befestigungsabschnitte. Diese Befestigungsabschnitte sind in Erstreckungsrichtung des Formschlusselementes alternierend und hintereinander vorgesehen. Dementsprechend wechseln sich Befestigungsabschnitte des Gehäuseunterteils mit Befestigungsabschnitten des Gehäusedeckels ab. Die Befestigungsabschnitte der unterschiedlichen Gehäuseteile verzahnen sich dementsprechend in Erstreckungsrichtung des Formschlusselementes. Diese Befestigungsabschnitte bilden die Anlageflächen aus. Dabei erfolgt die Ausbildung derart, dass die durch das Gehäuseunterteil gebildete Anlagefläche eine durch den Gehäusedeckel gebildete und an dem Befestigungsabschnitt des Gehäusedeckels vorgesehene Anlagefläche überragt. Bei dieser Anschauung wird davon ausgegangen, dass das Gehäuse auf einer durch das Gehäuseunterteil gebildeten Stellfläche steht und der Gehäusedeckel das Gehäuseoberteil oberseitig abdeckt.

Wie bereits vorerwähnt, befindet sich das Formschlusselement üblicherweise an der Außenseite des Gehäuses unmittelbar benachbart zu dessen Außenwand. Hierzu ragen von den Befestigungsabschnitten vorzugweise Befestigungsköpfe ab, die die Anlageflächen ausbilden. Diese Befestigungsköpfe überragen die Außenfläche des üblicherweise glatten und ebenen Gehäuses.

Mit Blick auf eine gewünschte formschlüssige Halterung des länglichen Formschlusselementes in einer Richtung quer zu seiner Erstreckungsrichtung sind die Befestigungsköpfe von Gehäuseunterteil und/oder Gehäusedeckel dabei hakenförmig ausgebildet. Der an dem Gehäuseunterteil vorgesehene Befestigungskopf hat dadurch einen die Anlagefläche überragenden und in Richtung auf das Gehäuseunterteil vorspringenden Verriegelungszapfen. Der an dem Gehäusedeckel zusätzlich oder alternativ vorgesehene Befestigungskopf hat einen die Anlagefläche dieses Verriegelungszapfens überragenden und in Richtung auf den Gehäusedeckel vorspringenden Verriegelungszapfen. Durch die Verriegelungszapfen ist eine Anlagefläche gebildet, die das längliche Verriegelungselement auf seiner dem Gehäuse abgewandten Seite übergreift. So wird durch die Befestigungsköpfe das längliche Verriegelungselement formschlüssig zwischen der Gehäusewandung und dem Verriegelungszapfen geklemmt und die Verriegelungszapfen bilden dabei auf ihrer dem Formschlusselement zugewandten Seite die zuvor beschriebenen Halteflächen aus.

Gemäß einer alternativen Ausgestaltung sind mehrere Verriegelungsköpfe und ein Verriegelungsschieber vorgesehen. Die Verriegelungsköpfe sind durch eine Einbringöffnung hindurchführbar, die an dem Verriegelungsschieber und/oder dem Gehäuseunterteil bzw. dem Gehäusedeckel ausgespart sind. Folglich sind die Einbringöffnungen so dimensioniert, dass die Verriegelungsköpfe durch die Einbringöffnungen hindurchpassen. An die Einbringöffnungen schließen sich Verriegelungsöffnungen an. Diese Verriegelungsöffnungen haben eine lichte Weite, die geringer ist als diejenigen der Einbringöffnungen. Die Verriegelungsköpfe sind dementsprechend so dimensioniert, dass die in den Verriegelungsöffnungen aufgenommenen Verriegelungsköpfe in einer Richtung quer zur Erstreckungsrichtung des länglichen Formschlusselementes formschlüssig gehalten sind. Die Verriegelungsköpfe haben dazu vorzugsweise einen die Anlagefläche überragenden Verriegelungsvorsprung, der die zuvor diskutierte Haltefläche in der jetzt beschriebenen bevorzugten Ausgestaltung ausbildet. Der Verriegelungsvorsprung übergreift bei in der Verriegelungsöffnung aufgenommenem Verriegelungskopf die Verriegelungsöffnung und führt somit zu einer formschlüssigen Sicherung des länglichen Formschlusselementes gegenüber dem Gehäuse auf der dem Gehäuse abgewandten Seite des Formschlusselementes.

Mit Blick auf eine formschlüssige Sicherung des länglichen Formschlusselementes in seiner Haupterstreckungsrichtung ist vorzugsweise zwischen der Einbringöffnung und der Verriegelungsöffnung ein die Verriegelungsöffnung überragender Rastnocken vorgesehen. Dieser Rastnocken ist derart ausgebildet, dass er bei in der Verriegelungsöffnung aufgenommenem Verriegelungskopf den Verriegelungskopf hintergreift, so dass eine unbeabsichtigte Verschiebung des länglichen Formschlusselementes durch formschlüssige Anlage des Verriegelungskopfes gegenüber dem Rastnocken unterbleibt. Vorzugsweise ist zwischen jeder Einbringöffnung und der ihr zugeordneten Verriegelungsöffnung ein solcher Rastnocken vorgesehen. Sämtliche Einbring- und Verriegelungsöffnungen sind dabei vorzugsweise identisch ausgebildet und haben identischen Querabstand zueinander.

Mit Blick auf eine möglichst dünnwandige Ausgestaltung von Gehäuseunterteil und Gehäusedeckel und einer einfachen Herstellung des länglichen Formschlusselementes wird gemäß einer bevorzugten Weiterbildung der vorliegenden Erfindung vorgeschlagen, die Verriegelungsköpfe an dem Gehäuseunterteil und dem Gehäusedeckel vorzusehen und zwar derart, dass diese eine Außenfläche des Gehäuses überragen. Die Einbring- und Verriegelungsöffnungen sind an dem Verriegelungsschieber ausgespart, der das längliche Formschlusselement der vorliegenden Erfindung ausbildet. Der längliche Verriegelungsschieber ist in seiner einfachen Ausgestaltung demnach durch einen Blechstreifen gebildet, der zur Ausformung der Einbring- und Verriegelungsöffnungen stanzbearbeitet ist. Neben diesen Öffnungen kann der Verriegelungsschieber weitere Öffnungen aufweisen. Diese dienen einerseits der Gewichtsreduzierung. Andererseits ist es möglich, die Klauen eines Schiebewerkzeuges in dieser weiteren Öffnungen einzubringen, um den Verriegelungsschieber nach Einbringen der Verriegelungsköpfe in die Einbringöffnungen längs zu verschieben und die Formschlussverbindung unter Kompression des Dichtelementes herzustellen.

Wie zuvor bereits erwähnt, erstreckt sich das bevorzugt vorgesehene längliche Formschlusselement vorzugsweise parallel zu der Außenfläche des Gehäuses. Das längliche Formschlusselement liegt besonders bevorzugt an der Außenfläche des Gehäuses an.

Mit Blick auf eine einfache Montage und sichere Aufnahme der Anschlüsse zu den einzelnen elektrischen Heizelementen wird gemäß einer bevorzugten Weiterbildung der vorliegenden Erfindung vorgeschlagen, den Gehäusedeckel mit einem die Anschlusskammer umfänglich umgebenden Rand auszubilden. Auf diesen Rand ist ein Anschlusskammer-Deckel aufgelegt. Der Anschlusskammer-Deckel ist vorzugsweise mit dem Gehäusedeckel formschlüssig, beispielsweise über eine Rastverbindung, verbunden.

Das Gehäuse der erfindungsgemäßen elektrischen Heizvorrichtung kann vorzugsweise einfach und ohne die Verwendung von Schrauben versiegelt werden. Durch angepasste Ausgestaltung der Anlageflächen und des Formschlusselementes kann denkbaren Fertigungstoleranzen Rechnung getragen werden. Wird innerhalb der vorbestimmten Fertigungstoleranzen bei der Herstellung der einzelnen Komponenten gearbeitet, was bei der Herstellung der Komponenten dokumentiert werden kann, so geben die hierdurch gebildeten definierten Formschlussverbindungen innerhalb der gegebenen Toleranzen zwingend vor, die die vorbestimmte Dichtigkeit erfüllt ohne dass es zu Montagefehlern durch beispielsweise übermäßiges oder zu geringes Anziehen von Befestigungselementen wie Schrauben oder dergleichen kommen kann. Die erfindungsgemäße elektrische Heizvorrichtung kommt vorzugsweise ohne jegliche Schrauben zum Verbinden von Gehäuseunterteil und Gehäusedeckel bzw. Gehäuseunterteil, Gehäusedeckel und Anschlusskammer-Deckel aus. Ohne Schrauben kann auch beispielsweise ein Steuergehäuse mit dem Gehäuseunterteil bzw. dem Gehäusedeckel verbunden sein. Es entfallen damit sämtliche Schraubverbindungen, die die Gefahr mit sich bringen, bei fehlerhafter Montage zu versagen bzw. zerstört zu werden oder sich aufgrund der Vibrationen in dem Kraftfahrzeug lösen.

Bei der Herstellung des erfindungsgemäßen Erzeugnisses wird vorzugsweise zunächst das Gehäuseunterteil aus Kunststoff hergestellt. Der Gehäusedeckel wird aus einem gut wärmeleitfähigen Material ebenfalls als separates

Bauteil hergestellt. Der Gehäusedeckel wird insbesondere mittels Druckguss aus Aluminium hergestellt. Danach werden Gehäuseunterteil und Gehäusedeckel gefügt. Das Fügen erfolgt dabei unter Zwischenlage und Kompression eines Dichtelementes. Das Dichtelement kann zuvor in eine an dem Gehäuseunterteil und/oder dem Gehäusedeckel ausgesparten Nut eingesetzt worden sein. Ebenso ist es möglich, das Dichtelement beim Spritzgießen des aus Kunststoff gebildeten Gehäuseunterteils mit diesem zu verbinden. Möglich ist es auch, das Dichtelement an das Gehäuseteil anzuspritzen, d.h. das Dichtelement stoffschlüssig mit dem Gehäuseunterteil im Wege des Spritzgießens zu verbinden (Zwei-Komponenten-Spritzgießen z.B. mit TPE für das Dichtelement). Beim Fügen der beiden Gehäuseteile wird das Dichtelement komprimiert. Die Kompression erfolgt dabei durch eine äußere Kraft, die auf das Gehäuseunterteil bzw. den Gehäusedeckel aufgebracht wird, und zwar in einer Richtung im Wesentlichen rechtwinklig zur Haupterstreckungsrichtung des Dichtelementes. In einer Richtung rechtwinklig hierzu, d.h. parallel zu der Haupterstreckungsrichtung des Dichtelementes wird ein längliches Formschlusselement zwischen einander gegenüberliegende Anlageflächen von Gehäuseunterteil und Gehäusedeckel eingebracht. Danach wird das Gehäuseunterteil bzw. der Gehäusedeckel von der äußeren Kraft entlastet. Infolge dessen legen sich die Anlageflächen unter einer leicht entlasteten Vorspannkraft des Dichtelementes gegen das längliche Formschlusselement an. Das längliche Formschlusselement ist danach kraft- bzw. reibschlüssig zwischen den Anlageflächen gehalten und fixiert. Die Kompression des Dichtelements wird durch das längliche Formschlusselement aufrecht erhalten und durch Halten des Formschlusselementes in seiner Einbaulage gesichert.

Das längliche Formschlusselement wird üblicherweise in seiner Erstreckungsrichtung längs verschoben und zwischen die einander gegenüberliegenden Anlageflächen gebracht. Die Haupterstreckungsrichtung des länglichen Formschlusselementes entspricht dabei der Haupterstreckungsrichtung des Dichtelementes. Mit anderen Worten ist im Grunde eine Parallelität zwischen der Erstreckungsrichtung des länglichen Formschlusselementes und der Erstreckungsrichtung des Dichtelementes zu bevorzugen. Das Dichtelement kann zwar auf verschiedenen Ebenen vorgesehen sei, die jeweils die Haupterstreckungsrichtung vorgeben und zwischen den Ebenen können Rampenabschnitte vorgesehen sein. Solche Rampenabschnitte werden aber bei der Ausgestaltung der Abdichtung zwischen dem Gehäuseunterteil und dem Gehäusedeckel nur einen relativ geringen Anteil der umlaufenden Dichtung einnehmen. Idealerweise erstreckt sich das Dichtelement lediglich in einer Ebene, die rechtwinklig zu der Fügerichtung von Gehäuseunterteil und Gehäusedeckel ist und zu der rechtwinklig die äußere Kraft aufgebracht wird. Nachdem das längliche Formschlusselement in seine endgültige Position verbracht worden ist, in welcher das längliche Formschlusselement mit den Anlageflächen zusammenwirkt und üblicherweise sämtliche Anlageflächen überdeckt, wird das Gehäuseunterteil bzw. der Gehäusedeckel von der äußeren Kraft entlastet. Hierdurch legen sich die Anlageflächen unter Vorspannung des Dichtelementes an das längliche Formschlusselement an. Mit anderen Worten bewirkt das längliche Formschlusselement durch Formschluss eine Haltekraft, die der Kraft des Dichtelementes entgegenwirkt, mit welcher das Dichtelement Gehäuseunterteil und Gehäusedeckel auseinanderdrücken will. Danach ist eine formschlüssige und dichte Verbindung zwischen den Gehäuseteilen geschaffen. Das Gehäuse ist versiegelt und zwar über einen Formschluss.

Die äußere Kraft kann beispielsweise durch einen Pressstempel aufgebracht werden, der den Gehäusedeckel gegen das Gehäuseunterteil unter Kompression des Dichtelementes anpresst. Dadurch werden die einander gegenüberliegenden Anlageflächen stärker voneinander beabstandet als im montierten Zustand. Das längliche Formschlusselement kann somit mit Spiel oder lediglich mit geringer Reibkraft an den gegenüberliegenden Anlageflächen vorbei zwischen die Anlageflächen hineingeführt werden. Diese Einführbewegung erfolgt in Längsrichtung des länglichen Formschlusselementes.

Das Verfahren lässt sich danach besonders einfach durchführen und es ergibt sich eine einfache und zuverlässige Abdichtung des Gehäuses.

Das Gehäuse der elektrischen Heizvorrichtung besteht ganz oder teilweise aus leichtem und kostengünstig herzustellenden Kunststoff. Sofern das Gehäuse wärmebeaufschlagte Teile hat, können mit der Formschlussverbindung auf einfache Weise Gehäuseteile unterschiedlicher stofflicher Beschaffenheit gefügt und fluiddicht miteinander verbunden werden, auch dann, wenn in dem versiegelten Gehäuse ein erheblicher Innendruck herrscht. Das erfindungsgemäße Gehäuse ist auch dann dicht, wenn ein Innendruck von bis zu 3 bar, bevorzugt von bis zu 5 bar herrscht. Diese Dichtigkeit wird üblicherweise in dem erfindungsgemäßen versiegelten Gehäuse bewirkt ohne dass Schrauben oder andere, manuell oder maschinell anzuziehende Befestigungsmittel zum Einsatz kommen. Das versiegelte Gehäuse hat üblicherweise überhaupt keine Schrauben. Sämtliche Verbindungen jedenfalls zwischen dem Gehäuseunterteil und dem Gehäusedeckel werden üblicherweise mittels Formschluss hergestellt und gehalten. Auch die übrigen Verbindungen an dem versiegelten Gehäuse sind vorzugsweise ausschließlich als Formschlusselemente ausgeformt.

Weitere Einzelheiten und Vorteile der vorliegenden Erfindung ergeben sich aus der nachfolgenden Beschreibung von Ausführungsbeispielen in Verbindung mit der Zeichnung. In dieser zeigen:
- Figur 1: eine perspektivische Seitenansicht eines ersten Ausführungsbeispiels einer elektrischen Heizvorrichtung ;
- Figur 2: ein vergrößertes Detail in perspektivischer Seitenansicht des in Figur 1 gezeigten Ausführungsbeispiels;
- Figur 3: eine Querschnittsansicht des in den Figuren 1 und 2 gezeigte Ausführungsbeispiel;
- Figur 4: eine Längsschnittansicht des ersten Ausführungsbeispiels mit einem aufgesetzten Steuergehäuse;
- Figur 5: eine Ansicht gemäß Figur 1 eines zweiten Ausführungsbeispiels einer elektrischen Heizvorrichtung;
- Figur 6: eine Längsschnittansicht eines Gehäuseunterteils eines dritten Ausführungsbeispiels einer elektrischen Heizvorrichtung;
- Figur 7: eine perspektivische Seitenansicht gemäß Figuren 1 bzw. 6 eines vierten Ausführungsbeispiels einer elektrischen Heizvorrichtung;
- Figur 8: das in Figur 7 gezeigte Ausführungsbeispiel vor dem endgültigen Fügen des Gehäuses;
- Figur 9: die Darstellung nach Figur 8 nach dem endgültigen Fügen des Gehäuses;
- Figur 10: eine perspektivische Schnittansicht entlang der Linie X-X gemäß Figur 9;
- Figur 11: eine perspektivische Seitenansicht eines fünften Ausführungsbeispiels einer elektrischen Heizvorrichtung:
- Figur 12: eine perspektivische Seitenansicht eines länglichen Formschlusselementes des in Figur 11 gezeigten Ausführungsbeispiels; und

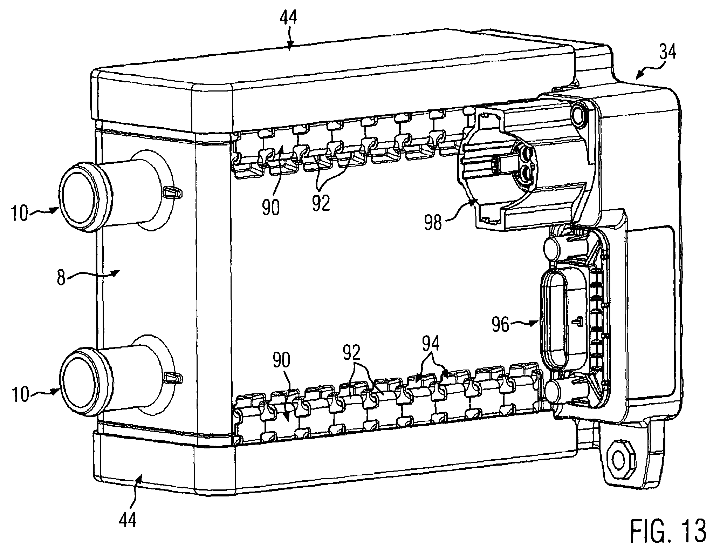

- Figur 13: eine perspektivische Seitenansicht gemäß Figur 11 mit aufgesetztem Gehäusedeckel und Steuergehäuse.

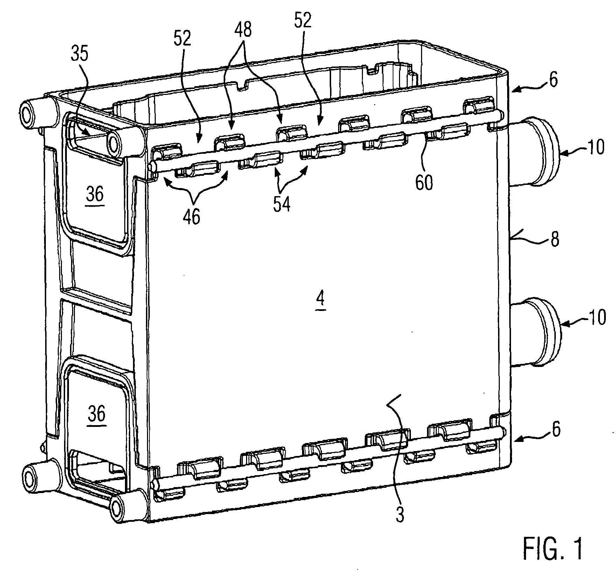

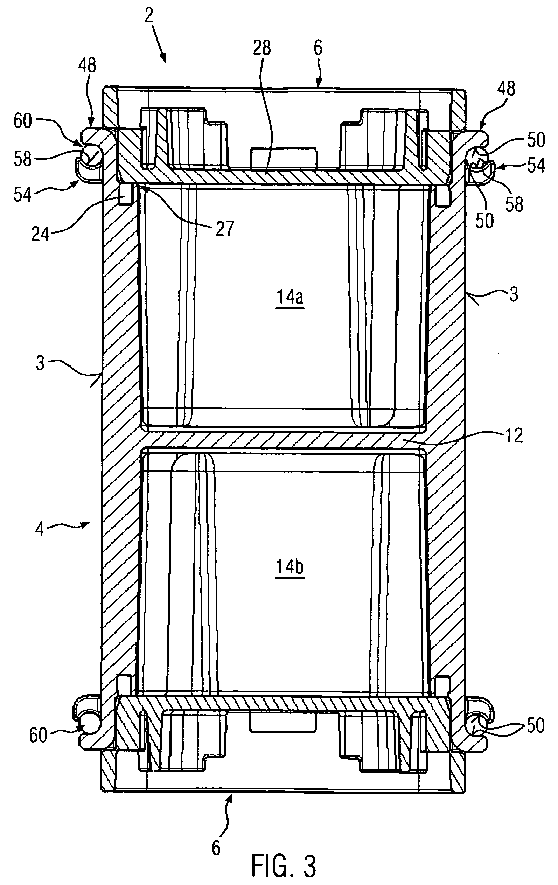

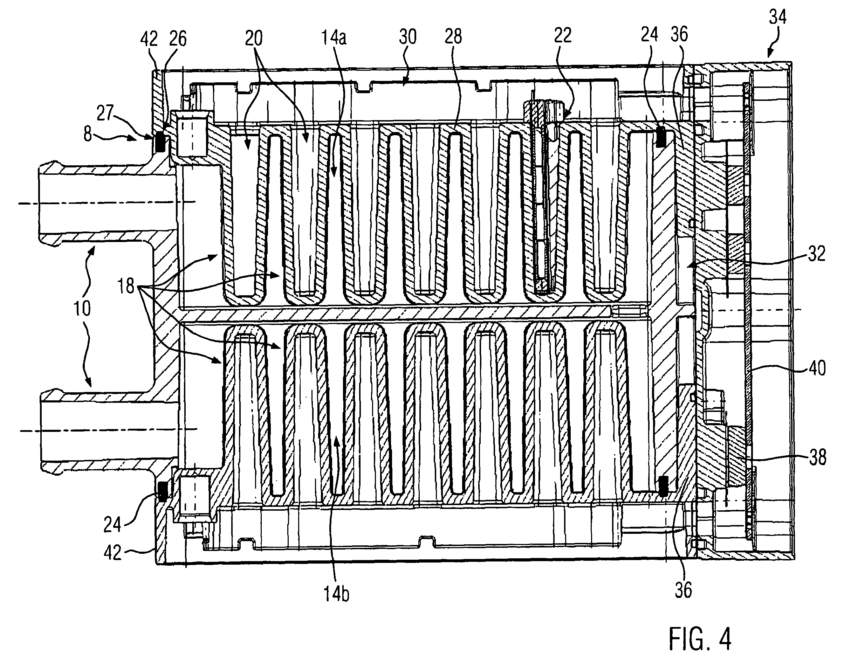

Die Figur 1 zeigt eine perspektivische Ansicht eines versiegelten Gehäuses 2 mit einer ebenen, geradlinig verlaufenden Außenwand 3, welches vorliegend dreiteilig mit einem Gehäuseunterteil 4 und zwei einander gegenüberliegenden Gehäusedeckeln 6 ausgebildet ist. Die Gehäusedeckel 6 sind jeweils identisch ausgeformt und als Aluminium-Druckgussbauteile hergestellt. Das Gehäuseunterteil 4 ist ein spritzgegossenes Kunststoffbauteil, dessen erste Stirnseite 8 von zwei sich parallel erstreckenden Anschlussstutzen 10 überragt ist. Wie insbesondere aus Figuren 3 und 4 ersichtlich, bildet das Gehäuseunterteil 4 diese Anschlussstutzen 10 einteilig und einteilig auch eine mittige Trennwand 12 aus, die zwei Zirkulationskammern 14a, 14b voneinander trennt, die über einen Strömungsdurchgang 16, der in der Trennwand ausgespart ist, miteinander kommunizieren, so dass eine Strömung von dem einen Anschlussstutzen 10 durch die zugeordnete Zirkulationskammer 14a, durch den Strömungsdurchgang 16 und die andere Zirkulationskammer 14b möglich ist, die durch den anderen Anschlussstutzen 10 aus dem Gehäuse 2 herausgeleitet wird.

Der Gehäusedeckel 6 ist bei dem gezeigten Ausführungsbeispiel nicht nur als Abdeckung für die Zirkulationskammer 14a, 14b vorgesehen. Vielmehr bildet der Gehäusedeckel 6 auch Heizrippen 18 mit jeweils U-förmigen Ausnehmungen 20 aus. In diese U-förmigen Ausnehmungen 20 sind elektrische Heizelemente eingesetzt. In Figur 4 ist ein PTC-Heizelement 22 dargestellt, welches in der EP 1 872 986 A1 bzw. der EP 1 921 896 A1 beschriebenen Weise ausgestaltet und in der beispielsweise in EP 2 440 004 A1 beschriebenen Weise in der U-förmigen Ausnehmung 20 aufgenommen ist. Bezüglich der konkreten Ausgestaltung des PTC-Heizelementes 22 und der Anordnung innerhalb der U-förmigen Ausnehmungen 20 wird auf die Offenbarung der zuvor genannten Offenlegungsschriften der vorliegenden Anmelderin verwiesen, deren Offenbarungsgehalt insofern in die Offenbarung der vorliegenden Anmeldung durch Bezugnahme aufgenommen wird.

Wie ferner die Schnittdarstellungen nach den Figuren 3 und 4 erkennen lassen, liegt der Gehäusedeckel 6 unter Zwischenlage eines Dichtelementes 24 an dem Gehäuseunterteil 4 an. Das Dichtelement 24 ist in einer an dem Gehäuseunterteil 4 ausgesparten Nut 26 eingebracht und dort gehalten. Das Dichtelement 24 überragt eine stirnseitige Endfläche des Gehäuseunterteils 4, auf welche der Gehäusedeckel 6 unter Ausbildung einer Fuge 27 aufgesetzt wird.

Der Gehäusedeckel 6 weist neben den U-förmigen Ausnehmungen 22 eine Trennwand 28 auf, welche die zugeordnete Zirkulationskammer 14 von einer im Wesentlichen von dem Gehäusedeckel 6 umgebenen Anschlusskammer 30 trennt. In dieser Anschlusskammer 30 werden die PTC-Heizelemente 22 in der in EP 2 440 004 A1 beschriebenen Weise mit einer nicht gezeigten Leiterplatte kontaktiert, deren Leiterbahnen bis zu der zweiten Stirnseite 32 und durch eine an der zweiten Stirnseite 32 vorgesehene Öffnung 35 in ein dort vorgesehenes Steuergehäuse 34 geführt sind, wie dies in der EP 2 440 004 A1 bzw. der EP 1 872 986 A1 der vorliegenden Anmelderin beschrieben ist. Deren Offenbarungsgehalt ist insofern dem Offenbarungsgehalt der vorliegenden Anmeldung durch Bezugnahme zuzurechnen.

Wie insbesondere Figur 4 verdeutlicht, hat der Gehäusedeckel 6 einen Anlageschenkel 36, der einteilig an dem Gehäusedeckel 6 ausgeformt ist und der an der zweiten Stirnseite 32 des Gehäuseunterteils 4 freiliegt (vgl. Figuren 1 und 4). Dieser Anlageschenkel 36, der wärmeleitend mit den Heizrippen 18 innerhalb des Gehäuseunterteils 4 verbunden ist, dient als Wärmesenke und Anlagefläche zur Ableitung von Verlustleistung von Leistungstransistoren 38, die innerhalb des Steuergehäuses 34 vorgesehen und an einer Unterseite einer Leiterplatte 40 in einer Weise befestigt und gegen den Anlageschenkel 36 angelegt sind, wie dies im Einzelnen in EP 2 440 004 A1 beschrieben ist. Auch insofern ist der Offenbarungsgehalt der EP 2 440 004 A1 dem Offenbarungsgehalt der vorliegenden Patentbeschreibung hinzuzurechnen.

Der Anlageschenkel 36 liegt an der zweiten Stirnseite 32 frei, d.h. übergreift das Gehäuseunterteil 4 außenseitig und bildet aufgrund der einteiligen Ausgestaltung mit den Heizrippen 18, die von dem in der Zirkulationskammer 14 aufgenommenen Fluid umströmt werden, die Wärmesenke aus.

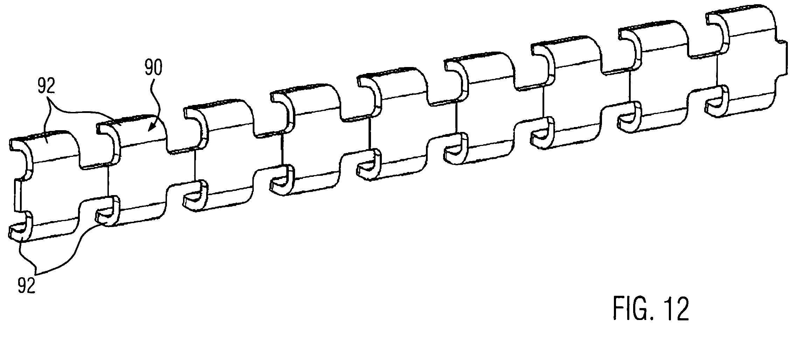

Der Gehäusedeckel 6 hat einen umlaufenden Rand 42, auf den ein Anschlussdeckel 44 aufclipsbar ist (vgl. Figur 12).

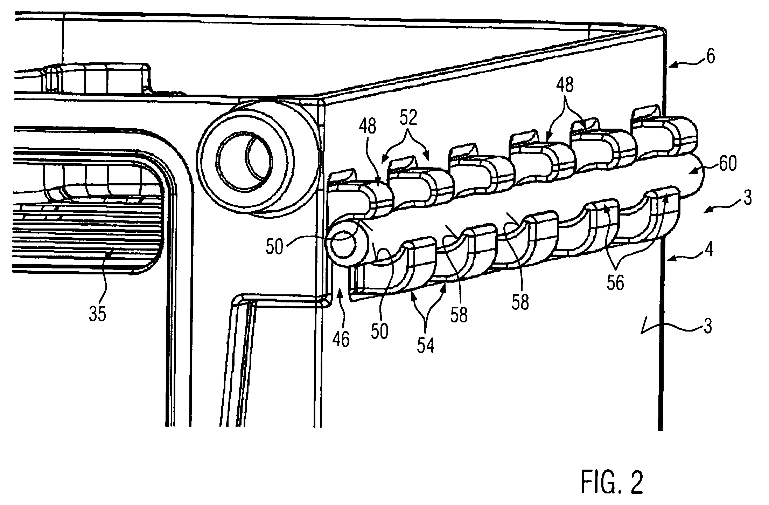

Die fluiddichte Abdeckung des Gehäuseunterteils 4 ergibt sich insbesondere aus den Figuren 1 und 2. Wie aus diesen beiden Figuren ersichtlich, hat das Gehäuseunterteil 4 mehrere mit Abstand zueinander vorgesehene Befestigungsabschnitte 46, die an der Außenwand 3, d.h. Längsseite des Gehäuses 2 zunächst in der Ebene dieser Außenwand 3 vorgesehen sind. Die Befestigungsabschnitte 46 weisen Befestigungsköpfe 48 auf, die die Außenwand 3 überragen und eine sich im Wesentlichen rechtwinklig zu der Außenwand 3 erstreckende Anlagefläche 50 ausbilden.

Auch der Gehäusedeckel 6 hat Befestigungsabschnitte 52, die mit Abstand zueinander vorgesehen sind, derart, dass die Befestigungselemente 46 des Gehäuseunterteils 4 zwischen benachbarte Befestigungsabschnitte 52 des Gehäusedeckels 6 ragen können. Die Befestigungsabschnitte 52 des Gehäusedeckels 6 weisen hakenförmige Befestigungsköpfe 54 auf, die - wie die Befestigungsköpfe 48 des Gehäuseunterteils 4 - Anlageflächen 50 ausformen. Aufgrund der hakenförmigen Ausgestaltung der Befestigungsköpfe 54 bilden diese die Anlageflächen 50 in Richtung auf den Gehäusedeckel 6 vorspringende Verriegelungszapfen 56 aus. Jeder Verriegelungszapfen 56 formt eine Haltefläche 58 aus. Zwischen den einander gegenüberliegenden Anlageflächen 50 des Gehäusedeckels 6 einerseits und des Gehäuseunterteils 4 andererseits ist ein stabförmiges, d.h. zylindrisches und längliches Formschlusselement 60 angeordnet.

Zur Montage des in den Figuren 1 bis 4 gezeigten Ausführungsbeispiels werden zunächst die beiden Gehäuseteile 4, 6 als separate Bauteile hergestellt. Danach wird in die Nut 26 das Dichtelement 24 eingesetzt. Der Gehäusedeckel 6 wird nunmehr auf das Gehäuseunterteil 4 aufgesetzt. Danach wird durch eine äußere Kraft das Dichtelement 24 komprimiert, d.h. die beiden Gehäuseelemente 4, 6 werden gegeneinander gedrückt unter Kompression des Dichtelementes 24. Durch diese Kompression werden die Anlageflächen 50 des Gehäusedeckels 6 einerseits und die Anlageflächen 50 des Gehäuseunterteils 4 andererseits maximal voneinander entfernt. Dann wird das längliche Formschlusselement 60 entlang seiner Längserstreckungsrichtung, d.h. Haupterstreckungsrichtung und damit parallel zu der Außenwand 3 zwischen die Befestigungsköpfe 48, 54 geführt, bis die in den Figuren 1 und 2 gezeigte Endlage erreicht ist. Danach wird die äußere Kraft von dem Gehäuseunterteil bzw. dem Gehäusedeckel entlastet, so dass beide Teile sich aufgrund der entspannenden Kompression des Dichtelementes 24 geringfügig voneinander entfernen, und sich die in Kraftwirkungsrichtung gegenüberliegenden Anlageflächen 50 annähern bis die beiderseitigen Anlageflächen 50 zur Anlage an dem Formschlusselement 60 gelangen. Danach sind die beiden Gehäuseteile 4, 6 formschlüssig unter Kompression des Dichtelementes gefügt. Die von dem Dichtelement 24 bewirkte Vorspannkraft wird von dem Formschlusselement 60 gehalten. Darüber hinaus wird durch die Halteflächen 58 der hakenförmigen Befestigungsköpfe 54 des Gehäusedeckels 6 verhindert, dass das Formschlusselement 60 in einer Richtung im Wesentlichen rechtwinklig zu der Außenwand 3 beispielsweise in Folge von Vibration herauswandern kann. Die hakenförmigen Befestigungsköpfe 54 halten dementsprechend das Formschlusselement 60 formschlüssig in einer sich quer zu dem länglichen Formschlusselement 60 erstreckenden Richtung und verhindert ein Abgleiten des Formschlusselementes 60 von den Anlageflächen 50.

Bei dem gezeigten Ausführungsbeispiel sind an beiden Längsseiten identische Ausgestaltungen zur Aufnahme und Halterung des Formschlusselementes 60 vorgesehen sind.

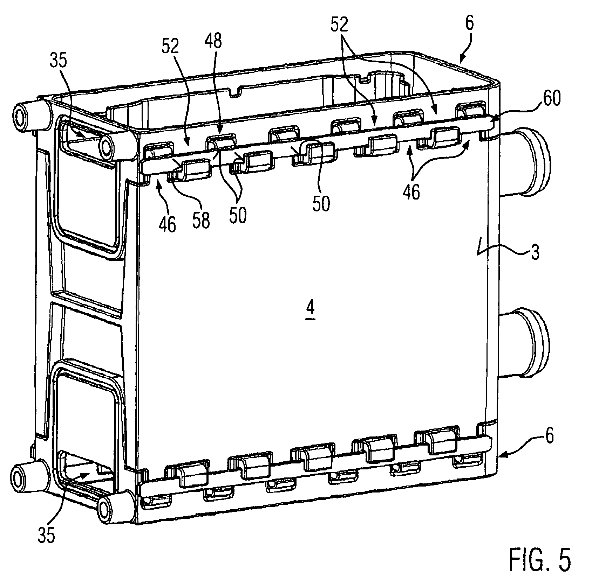

Die Figur 5 zeigt ein gegenüber dem Ausführungsbeispiel nach den Figuren 1 bis 4 leicht abgewandeltes Ausführungsbeispiel. Gleiche Bauteile sind mit gleichen Bezugszeichen gekennzeichnet.

Während bei dem ersten Ausführungsbeispiel das Formschlusselement 60 durch eine zylindrische Stange mit kreisrunden Querschnitt gebildet ist, hat das Formschlusselement 60 nach dem zweiten Ausführungsbeispiel gemäß Figur 5 einen rechteckigen Querschnitt und ist als Rechteckstab vorgesehen. Die hakenförmigen Befestigungsköpfe 54 des Gehäusedeckels 6 sind entsprechend abgewinkelt ausgebildet, so dass die Haltefläche 58 streng rechtwinklig zu der zugeordneten Anlagefläche 50 verläuft. Die Befestigungsköpfe 48 des Gehäuseunterteils 4 ragen im Wesentlichen mit einer sich rechtwinklig zu der Außenwand 3 erstreckenden Anlagefläche 50 von dem zugeordneten Befestigungsabschnitt 46 des Gehäuseunterteils 4 ab.

Wie bei dem ersten Ausführungsbeispiel, so ist auch bei dem zweiten Ausführungsbeispiel das Formschlusselement 60 endseitig an beiden Seiten leicht konisch angefast, wodurch das Einführen des Formschlusselements 60 zwischen die einander gegenüberliegenden Anlageflächen 50 erleichtert wird.

Bei beiden Ausführungsbeispielen liegt das Formschlusselement zwischen der Außenwand 3, welche hier durch die Befestigungsabschnitte 46 bzw. 52 fortgesetzt wird und den Halteflächen 48 formschlüssig fest, die Anlagenflächen 50 verhindern eine Bewegung rechtwinklig hierzu. Nicht gezeigte endseitige Anschläge können nach der Montage montiert werden bzw. zumindest einseitig fest an dem Gehäuseunterteil 4 bzw. dem Gehäusedeckel 6 vorgesehen sein, um eine Längsverschiebung des Formschlusselementes 60 zu verhindern. Ebenso gut kann das Formschlusselement 60 eine Aussparung aufweisen, die mit einem Vorsprung zusammenwirkt, der beispielsweise von der Anlagefläche 50 eines einzigen Befestigungskopfes 48 bzw. 54 abragt, um das Formschlusselement 60 auch in seiner Haupterstreckungsrichtung formschlüssig zu halten und ein Verrutschen bei Vibration unter Nutzungsbedingungen in dem Kraftfahrzeug zu verhindern.

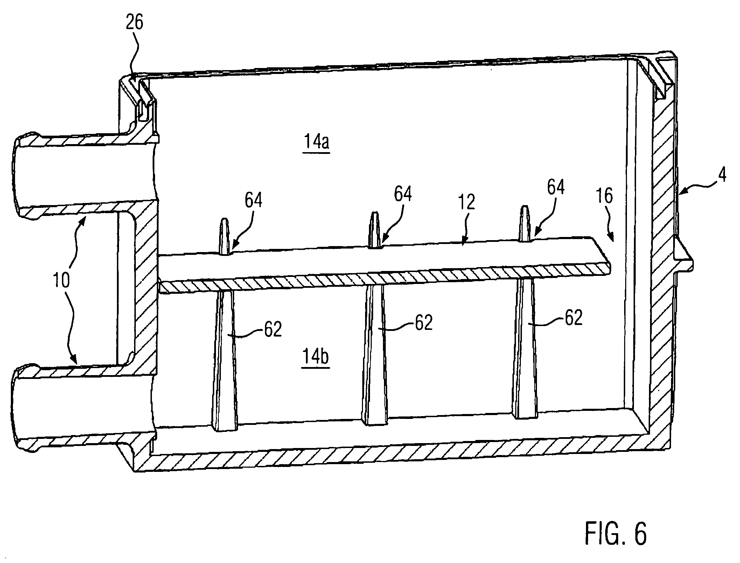

Die Figur 6 zeigt ein Ausführungsbeispiels eines Gehäuseunterteils 4 mit einer zunächst separat hergestellten Trennwand 12. Das Gehäuseunterteil 4 weist in die Zirkulationskammer 14a, 14b hineinragende und von einer Längswand innen abragende konisch zulaufende Auflagerippen 62 auf. Diesen zugeordnet weist die Trennwand 12 Aussparungen 64 auf. Die von oben in das Gehäuseunterteil 4 eingesetzte Trennwand 12 gleitet zunächst über die konischen Auflagerippen 62 ab, wobei aufgrund der Konizität der Auflagerippen 62 ein weiteres Abgleiten der Trennwand 12 verhindert wird. So werden innerhalb des Gehäuseunterteils 4 auf einfache Weise die beiden Zirkulationskammern 14a, 14b abgeteilt. Auf eine vollständige Dichtigkeit zwischen den beiden Kammern kommt es nicht an.

Die zuvor beschriebenen Ausführungsbeispiele nach den Figuren 1 bis 5 beruhen jeweils auf dem Prinzip, dass die Befestigungsabschnitte 46 und 52 jeweils alternierend in Längsrichtung des Formschlusselementes 60 vorgesehen sind und ineinander greifen. Zwischen benachbarten Befestigungsabschnitten 46 des Gehäuseunterteils 4 greifen jeweils benachbarte Befestigungsabschnitte 52 des Gehäusedeckels 6 ein. Die Gehäusedeckel 6 sind identisch. Das Formschlusselement 60 ist im Grunde als unspezifischer zylindrischer Körper ausgebildet und wird über die gesamte Längserstreckung der Außenwand 3 des Gehäuseunterteils eingeschoben. Das Formschlusselement 60 befindet sich in etwa auf Höhe des Dichtelementes 24.

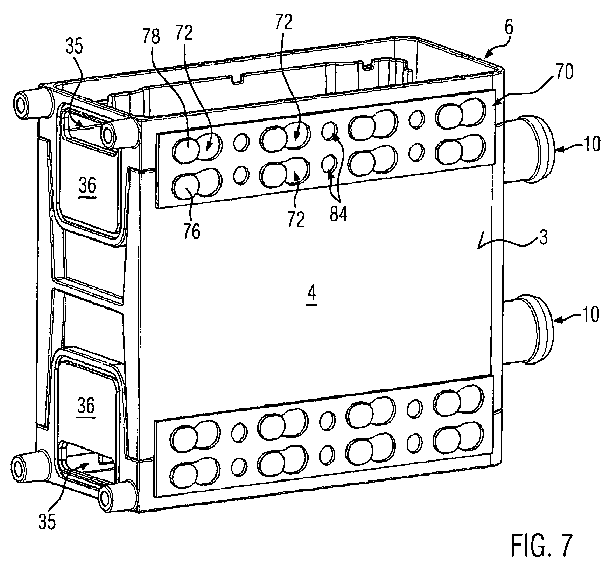

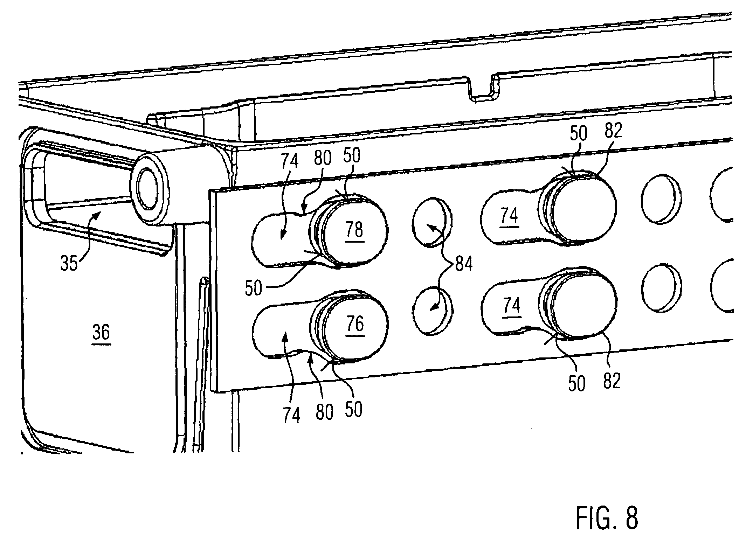

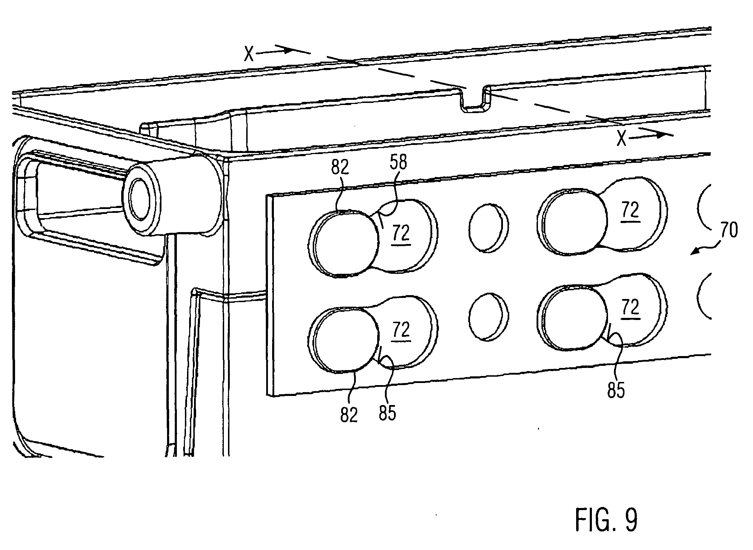

Demgegenüber handelt es sich bei dem Formschlusselement 60 des in den Figuren 7 bis 9 verdeutlichten Ausführungsbeispiels um einen als gestanzten Blechstreifen gebildeten Verriegelungsschieber 70, der ein Ausführungsbeispiel eines länglichen Formschlusselementes bildet. Der Verriegelungsschieber 70 hat Einbringöffnungen 72, die größer als sich an die Einbringöffnungen 72 anschließende Verriegelungsöffnungen 74 sind (vgl. Fig. 8). An dem Gehäuseunterteil 4 sind auf einer Höhe und hintereinander mehrere Verriegelungsköpfe 76 angeordnet. Der Gehäusedeckel 6 hat in gleicher Weise vorgesehene Verriegelungsköpfe 78. Die Verriegelungsköpfe 76 bzw. 78 erstrecken sich über die gesamte Längserstreckung der Außenwand 3.

Zur Montage wird zunächst der Verriegelungsschieber mit seinen Einbringöffnungen 72 fluchtend zu den Verriegelungsköpfen 76, 78 angeordnet. Dann wird der Verriegelungsschieber 70 über die Verriegelungsköpfe 76, 78 herübergeführt, d.h. die Verriegelungsköpfe 76, 78 werden durch die Einbringöffnung 72 hindurchgeführt. Danach liegt der Verriegelungsschieber 70 gegen die Außenwand 3 von Gehäuseunterteil 4 und Gehäusedeckel 6 an.

Danach wird üblicherweise von außen eine äußere Kraft aufgebracht, um Gehäuseunterteil 4 und Gehäusedeckel 6 gegeneinander zu drücken unter Kompression des Dichtelementes 24. Danach wird der Verriegelungsschieber 70 parallel zu der Außenwand 3 verschoben, wodurch die Verriegelungsköpfe 76, 78 in die Verriegelungsöffnungen 74 überführt werden. Zwischen den Verriegelungsöffnungen 74 und den Einbringöffnungen 72 befindet sich ein Nocken 80, der bei in der Verriegelungsöffnung 74 eingebrachten Verriegelungsköpfen 76, 78 die entsprechenden Köpfe 76, 78 hintergreift, so dass nach Entlasten der äußeren Kraft ein unbeabsichtigtes Verschieben des Verriegelungsschiebers 70 verhindert wird. Damit ist der Verriegelungsschieber 70 in Längserstreckung formschlüssig gehalten. Die Verriegelungsköpfe 76, 78 liegen mit ihrer Anlagefläche 50 gegen einen die Verriegelungsöffnung 74 begrenzenden Rand, der durch den Verriegelungsschieber 70 gebildet wird, formschlüssig an. Des Weiteren haben die Verriegelungsköpfe einen die entsprechende Anlagefläche 50 überragenden Verriegelungsvorsprung 82, der wie ein Teller die Anlagefläche 50 überragt und den endseitigen Abschluss der Verriegelungsköpfe 76, 78 bildet. Dieser Verriegelungsvorsprung 82 übergreift die Verriegelungsöffnung 74, so dass verhindert wird, dass der Verriegelungsschieber 70 von den Verriegelungsköpfen 76, 78 in einer Bewegung rechtwinklig zu der Außenwand 3 abgleitet. So bildet der Verriegelungsvorsprung 48 die zuvor bereits diskutierte Haltefläche aus, durch welche der Verriegelungsschieber 70 formschlüssig gehalten ist.

Die Figuren 7 bis 9 lassen zwischen den Einbring- und Verriegelungsöffnungen 72, 74 jeweils weitere Öffnungen 84 erkennen. Hierbei handelt es sich um Eingrifföffnungen für ein Werkzeug, mit dem der Verriegelungsschieber 70 verschoben wird, um die Köpfe 76, 78 von der Einbringöffnung 72 in die Verriegelungsöffnung 74 zu überführen. Bei der Anwendung eines solchen Werkzeuges kann gegebenenfalls darauf verzichtet werden, das Gehäuseunterteil 4 gegenüber dem Gehäusedeckel 6 durch eine äußere Kraft aufzupressen. Durch eine durch die Nocken 80 gebildeten Rampenfläche 85 zwischen der Einbringöffnung 72 und der Verriegelungsöffnung 74 wird das Zusammendrücken der beiden Gehäuseteile 4, 6 bewirkt. Aber auch bei dieser Ausgestaltung wird das Dichtelement dann über die Gebrauchslage hinaus verpresst, wenn die Verriegelungsköpfe 76, 78 den Nocken 80 passieren.

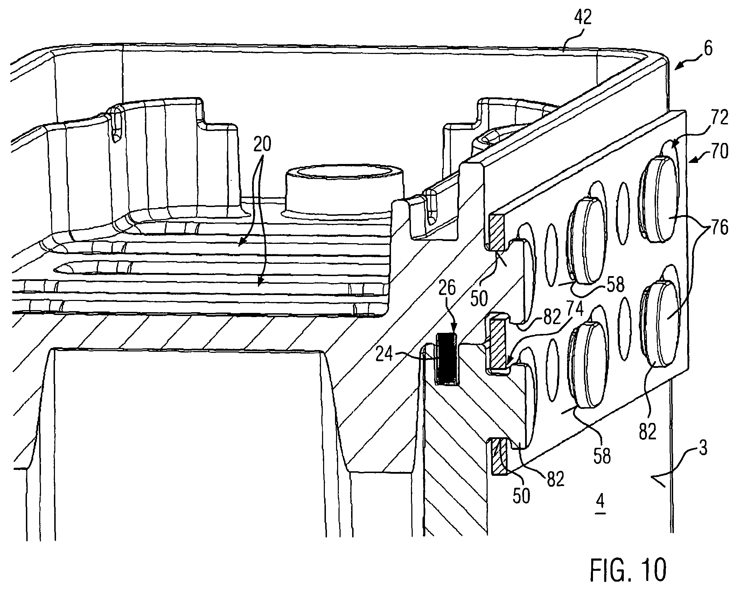

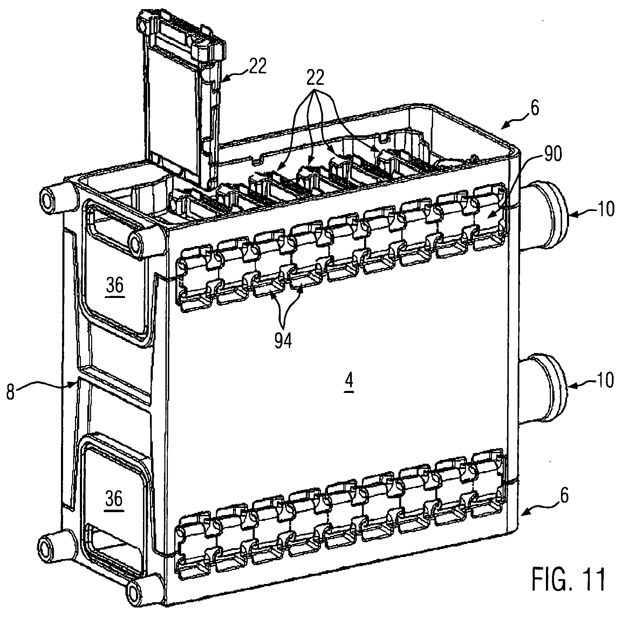

Die Figuren 10 bis 12 verdeutlichen ein weiteres, fünftes Ausführungsbeispiel. Bei diesem Ausführungsbeispiel ist ein längliches Formschlusselement 90 mit Einschubkrallen 92 vorgesehen. Die Einschubkrallen 92 wirken mit Ausnehmungen 94 zusammen, die an der Außenwand 3 des Gehäuseunterteils 4 und des Gehäusedeckels 6 ausgespart sind. Bei dem Formschlusselement 90 handelt es sich um ein durch Stanzen und Biegen hergestelltes Blechteil.

Durch den Eingriff der Einschubkrallen 92 in die Ausnehmungen 94 ist das Formschlusselement 90 gegen Verschieben in Längsrichtung gesichert. Auch bei diesem Ausführungsbeispiel hält das Formschlusselement 90 die Kompression des Dichtelementes 24.

Die Figur 12 lässt das zuvor bereits erwähnte Steuergehäuse 34 erkennen, welches an der zweiten Stirnseite 32 endseitig gegen das Gehäuse 2 angelegt und hiermit verrastet ist. Das Steuergehäuse 34 hat ein Steckergehäuse 96 für einen Steuerstecker und ein weiteres Steckergehäuse 98 für den Leistungsstrom. Diese Steckergehäuse 96, 98 erstrecken sich parallel zu den Anschlussstutzen 10 und sind von der gleichen Richtung aufzustecken. Die beiden Gehäusedeckel 6 sind jeweils von dem Anschlussdeckel 44 abgedeckt, dessen Rand jedenfalls teilweise die Außenwand 3 umschließt und auch das Formschlusselement 90 umgibt, so dass verhindert wird, dass die Einschubkrallen 92 aus der Ausnehmung 94 herausgleiten.

### Bezugszeichenliste

- 2: Gehäuse
- 3: Außenwand
- 4: Gehäuseunterteil
- 6: Gehäusedeckel
- 8: erste Stirnseite
- 10: Anschlussstutzen
- 12: Trennwand
- 14a: Zirkulationskammer
- 14b: Zirkulationskammer
- 16: Strömungsdurchgang
- 18: Heizrippe
- 20: U-förmige Ausnehmung
- 22: PTC-Heizelement
- 24: Dichtelement
- 26: Nut
- 27: Fuge
- 28: Trennwand
- 30: Anschlusskammer
- 32: zweite Stirnseite
- 34: Steuergehäuse
- 35: Öffnung
- 36: Anlageschenkel
- 38: Leistungstransistor
- 40: Leiterplatte
- 42: Rand
- 44: Anschlussdeckel
- 46: Befestigungsabschnitt Gehäuseunterteil
- 48: Befestigungskopf
- 50: Anlagefläche
- 52: Befestigungsabschnitt Gehäusedeckel
- 54: hakenförmiger Befestigungskopf
- 56: Verriegelungszapfen
- 58: Haltefläche
- 60: Formschlusselement
- 62: Auflagerippen
- 64: Aussparung
- 70: Verriegelungsschieber
- 72: Einbringöffnung
- 74: Verriegelungsöffnung
- 76: Verriegelungskopf
- 78: Verriegelungskopf
- 80: Nocken
- 82: Verriegelungsvorsprung
- 84: Einbringöffnungen
- 85: Rampenfläche
- 90: Formschlusselement (stanzbiegebearbeitetes Krallenelement)
- 92: Einschubkralle
- 94: Ausnehmung
- 96: Steckergehäuse Steuerleitung
- 98: Steckergehäuse Leistungsstrom

## Patentansprüche

1. Elektrische Heizvorrichtung mit einem Gehäuse (2), welches eine von einem Medium durchströmbare Zirkulationskammer (14a, 14b) umschließt, in welche wenigstens eine Heizrippe (18) hineinragt,
**dadurch gekennzeichnet, dass** die Zirkulationskammer (14a, 14b) von einem aus Kunststoff gebildeten Gehäuseunterteil (4) umgeben ist, das durch einen die Heizrippe (18) einteilig ausbildenden Gehäusedeckel (6) aus einem gut wärmeleitenden Werkstoff abgedeckt ist.

2. Elektrische Heizvorrichtung nach Anspruch 1, **dadurch gekennzeichnet, dass** die Heizrippe (18) mit einer U-förmigen Ausnehmung (20) versehen ist, die sich zu einer von der Zirkulationskammer (14a, 14b) getrennten Anschlusskammer (30) öffnet und wenigstens ein PTC-Heizelement (22) in sich aufnimmt, welches in wärmeleitendem Kontakt an gegenüberliegenden Innenseiten der U-förmigen Ausnehmung (20) anliegt.

3. Elektrische Heizvorrichtung nach Anspruch 1 oder 2, **dadurch gekennzeichnet, dass** das Gehäuseunterteil (4) unter Zwischenlage eines Dichtelementes (24) an dem Gehäusedeckel (6) anliegt und dass das Gehäuseunterteil (4) über eine das Dichtelement (24) formschlüssig unter Vorspannung haltende Formschlussverbindung mit dem Gehäusedeckel (6) verbunden ist.

4. Elektrische Heizvorrichtung nach einem der vorherigen Ansprüche, **gekennzeichnet durch** ein längliches, das Gehäuseunterteil (4) und den Gehäusedeckel (6) formschlüssig miteinander verbindendes Formschlusselement (60, 90), das zwischen einander gegenüberliegenden Anlageflächen (50) von Gehäuseunterteil (4) und einem Gehäusedeckel (6) vorgesehen ist und an den Anlageflächen (50) unter einer durch Kompression des Dichtelementes (24) bewirkten Vorspannkraft anliegt.

5. Elektrische Heizvorrichtung nach Anspruch 4, **dadurch gekennzeichnet, dass** längliche Formschlusselement (60, 90) durch sich quer zu dem länglichen Formschlusselement (60, 70, 90) erstreckende, von den Anlageflächen (50) des Gehäuseunterteils (4) bzw. des Gehäusedeckels (6) vorspringende Halteflächen (58) formschlüssig gehalten ist.

6. Elektrische Heizvorrichtung nach Anspruch 4 oder 5, **dadurch gekennzeichnet, dass** längliche Formschlusselement (60, 90) in seiner Längsrichtung formschlüssig gehalten ist.

7. Elektrische Heizvorrichtung nach einem der Ansprüche 4 bis 6, **dadurch gekennzeichnet, dass** das Gehäuseunterteil (4) und der Gehäusedeckel (6) ineinandergreifende Befestigungsabschnitte (46, 52) aufweisen, die in Erstreckungsrichtung des länglichen Formschlusselementes (60) alternierend und hintereinander vorgesehen sind und die Anlageflächen (50) ausbilden.

8. Elektrische Heizvorrichtung nach Anspruch 7, **dadurch gekennzeichnet, dass** die Befestigungsabschnitte (46, 52) von einer Außenfläche (3) des Gehäuses (2) abragende Befestigungsköpfe (48, 54) aufweisen, die die Anlageflächen (50) ausbilden und dass die Befestigungsköpfe (48, 54) hakenförmig ausgebildet sind, wobei der an dem Gehäuseunterteil (4) vorgesehene Befestigungskopf (48) einen die Anlagefläche (50) überragenden und in Richtung auf das Gehäuseunterteil (4) vorspringenden Verriegelungszapfen (56) und/oder der an dem Gehäusedeckel (6) vorgesehene Befestigungskopf (54) einen die Anlagefläche (50) überragenden und in Richtung auf den Gehäusedeckel (6) vorspringenden Verriegelungszapfen (56) aufweist.

9. Elektrische Heizvorrichtung nach einem der Ansprüche 1 bis 3, **gekennzeichnet durch** mehrere Verriegelungsköpfe (76, 78) und einen Verriegelungsschieber (70), wobei die Verriegelungsköpfe (76, 78) **durch** an dem Verriegelungsschieber (70) und/oder dem Gehäuseunterteil (4) bzw. dem Gehäusedeckel (6) ausgesparte Einbringöffnungen (72) hindurchführbar und **durch** Verschieben des Verriegelungsschieber (70) in sich an die Einbringöffnungen (72) anschließende Verriegelungsöffnungen (76) einbringbar sind.

10. Elektrische Heizvorrichtung nach Anspruch 9, **dadurch gekennzeichnet, dass** die Verriegelungsköpfe (76, 78) einen die Anlagefläche (50) überragenden Verriegelungsvorsprung (82) aufweisen und dass die Verriegelungsöffnung (74) derart an den zugeordneten Verriegelungskopf (76, 78) angepasst ist, dass der Verriegelungsvorsprung (82) bei in der Verriegelungsöffnung (74) aufgenommenem Verriegelungskopf (76, 78) die Verriegelungsöffnung (76) übergreift.

11. Elektrische Heizvorrichtung nach Anspruch 9 oder 10, **dadurch gekennzeichnet, dass** zwischen der Einbringöffnung (72) und der zugeordneten Verriegelungsöffnung (74) ein vorspringender Rastnocken (80) vorgesehen ist.

12. Elektrische Heizvorrichtung nach einem der Ansprüche 4 bis 11, **dadurch gekennzeichnet, dass** das längliche Formschlusselement (60, 90) oder der Verriegelungsschieber (70) sich parallel zu der Außenfläche (3) des Gehäuses (2) erstreckt.

13. Elektrische Heizvorrichtung nach einem der Ansprüche 4 bis 12 **dadurch gekennzeichnet, dass** das längliche Formschlusselement (60, 90) oder der Verriegelungsschieber (70) an der Außenfläche (3) des Gehäuses (2) anliegt.

14. Elektrische Heizvorrichtung nach einem der vorherigen Ansprüche, **dadurch gekennzeichnet, dass** der Gehäusedeckel (6) einen Rand (42) ausbildet, der eine sich zu den Heizrippen (18) öffnende Anschlusskammer (30) umfänglich umgibt und auf dem ein Anschlusskammer-Deckel (44) aufliegt.

## Claims

1. An electrical heating device with a housing (2) enclosing a circulation chamber (14a, 14b) for passing therethrough a medium and into which at least one radiator (18) projects,
**characterized in that**
the circulation chamber (14a, 14b) is enclosed by a housing lower part (4) made of plastic, which is covered by a housing cover (6) integrally forming the radiator (18) and made of a highly heat-conductive material.

2. The electrical heating device according to claim 1, **characterized in that** the radiator (18) is provided with a U-shaped opening (20) which opens towards a connection chamber (30) separated from the circulation chamber (14a, 14b) and which accommodates therein at least one PTC heating element (22), which PTC heating element (22) is in thermal conductive contact with inner sides of said U-shaped opening (20).

3. The electrical heating device according to claim 1 or 2, **characterized in that** the housing lower part (4) abuts on the housing cover (6) with an intermediate sealing element (24) extending therebetween and that the housing lower part (4) is connected to the housing cover (6) via a form fit connection maintaining the sealing element (24) under pretension in a form fit manner.

4. The electrical heating device according to any of the preceding claims, **characterized by** an elongate positive locking element (60, 90), which interconnects the housing lower part (4) and the housing cover (6) in a form fit manner and which is provided between opposed contact surfaces (50) of the housing lower part (4) and a housing cover (6) and abuts on the contact surfaces (50) under a pretensioning force caused by compression of the sealing element (24).

5. The electrical heating device according to claim 4, **characterized in that** the elongate positive locking element (60, 90) is retained in a form fit manner by retaining surfaces (58) extending transversely to the elongate positive locking element (60, 70, 90) and projecting from the contact surfaces (50) of the housing lower part (4) and the housing cover (6), respectively.

6. The electrical heating device according to claim 4 or 5, **characterized in that** the elongate positive locking element (60, 90) is retained in a form fit manner in its longitudinal direction.

7. The electrical heating device according to claims 4 to 6, **characterized in that** the housing lower part (4) and the housing cover (6) are provided with interengaging fastening sections (46, 52), which are provided alternately and in succession in the direction of extension of the elongate positive locking element (60) and which define the contact surfaces (50).

8. The electrical heating device according to claim 7, **characterized in that** the fastening sections (46, 52) comprise fastening heads (48, 54) projecting from an outer surface (3) of the housing (2) and defining the contact surfaces (50), and that the fastening heads (48, 54) are hook-shaped, wherein the fastening head (48) provided on the housing lower part (4) comprises a locking pin (56), which projects beyond the contact surface (50) and protrudes in the direction of the housing lower part (4), and/or the fastening head (54) provided on the housing cover (6) comprises a locking pin (56), which projects beyond the contact surface (50) and protrudes in the direction of the housing cover (6).

9. The electrical heating device according to claims 1 to 3, **characterized by** a plurality of locking heads (76, 78) and a locking slide (70), wherein the locking heads (76, 78) are adapted to be passed through insertion openings (72) formed on the locking slide (70) and/or the housing lower part (4) or the housing cover (6), respectively, and to be inserted into locking openings (74) adjoining the insertion openings (72) by displacing the locking slide (70).

10. The electrical heating device according to claim 9, **characterized in that** the locking heads (76, 78) comprise a locking projection (82) protruding beyond the contact surface (50), and that the locking opening (74) is adapted to the associated locking head (76, 78) such that, when the locking head (76, 78) is accommodated in the locking opening (74), the locking projection (82) overlaps the locking opening (74).

11. The electrical heating device according to claim 9 or 10, **characterized in that** a projecting locking cam (80) is provided between the insertion opening (72) and the associated locking opening (74).

12. The electrical heating device according to any of claims 4 to 11, **characterized in that** the elongate positive locking element (60, 70) or the locking slide (70) extends parallel to the outer surface (3) of the housing (2).

13. The electrical heating device according to any of claims 4 to 12, **characterized in that** the elongate positive locking element (60, 70) or the locking slide (70) abuts on the outer surface (3) of the housing (2).

14. The electrical heating device according to any of the preceding claims, **characterized in that** the housing cover (6) forms an edge (42), which extends circumferentially around the connection chamber (30) opening in the direction of the radiators (18) and on which a connection chamber cover (44) rests.

## Revendications

1. Dispositif de chauffage électrique comprenant un carter (2) enfermant une chambre de circulation (14a, 14b) à travers laquelle peut s'écouler un fluide et dans laquelle s'engage au moins une ailette de chauffage (18),
**caractérisé en ce que** la chambre de circulation (14a, 14b) est entourée par une partie inférieure de carter (4) réalisée en matière plastique et recouverte par un couvercle de carter (6), qui forme d'un seul tenant l'ailette de chauffage (18) et est réalisé en un matériau bon conducteur de la chaleur.

2. Dispositif de chauffage électrique selon la revendication 1, **caractérisé en ce que** l'ailette de chauffage (18) est dotée d'un évidement en forme de U (20), qui s'ouvre vers une chambre de raccordement (30) séparée de la chambre de circulation (14a, 14b), et qui accueille au moins un élément chauffant (22) du type PTC (à coefficient de température positif) s'appuyant par contact de conduction de chaleur sur des côtés intérieurs opposés de l'évidement (20) en forme de U.

3. Dispositif de chauffage électrique selon la revendication 1 ou la revendication 2, **caractérisé en ce que** la partie inférieure de carter (4) s'appuie contre le couvercle de carter (6) avec interposition d'un élément d'étanchéité (24), et **en ce que** la partie inférieure de carter (4) est reliée au couvercle de carter (6) par l'intermédiaire d'une liaison par complémentarité de formes maintenant l'élément d'étanchéité (24) sous précontrainte par complémentarité de formes.

4. Dispositif de chauffage électrique selon l'une des revendications précédentes, **caractérisé par** un élément de liaison par complémentarité de formes (60, 90) allongé, qui relie l'un à l'autre par complémentarité de formes, la partie inférieure de carter (4) et le couvercle de carter (6), et qui est prévu entre des surfaces d'appui (50) opposées de la partie inférieure de carter (4) et d'un couvercle de carter (6), et s'appuie contre lesdites surfaces d'appui (50) sous l'effet d'une force de précontrainte produite par la compression de l'élément d'étanchéité (24).

5. Dispositif de chauffage électrique selon la revendication 4, **caractérisé en ce que** l'élément de liaison par complémentarité de formes (60, 90) allongé est maintenu par complémentarité de formes par des surfaces de maintien (58), qui s'étendent transversalement par rapport à l'élément de liaison par complémentarité de formes (60, 70, 90) allongé et font saillie des surfaces d'appui (50) de la partie inférieure de carter (4) et respectivement du couvercle de carter (6).

6. Dispositif de chauffage électrique selon la revendication 4 ou la revendication 5, **caractérisé en ce que** l'élément de liaison par complémentarité de formes (60, 90) allongé est maintenu par complémentarité de formes dans sa direction longitudinale.

7. Dispositif de chauffage électrique selon l'une des revendications 4 à 6, **caractérisé en ce que** la partie inférieure de carter (4) et le couvercle de carter (6) présentent des tronçons de fixation (46, 52) s'engageant les uns dans les autres, qui sont prévus de manière alternée et les uns à la suite des autres dans la direction où s'étend l'élément de liaison par complémentarité de formes (60) allongé, et forment les surfaces d'appui (50).

8. Dispositif de chauffage électrique selon la revendication 7, **caractérisé en ce que** les tronçons de fixation (46, 52) présentent des têtes de fixation (48, 54), qui font saillie d'une surface extérieure (3) du carter (2) et forment les surfaces d'appui (50), et **en ce que** les têtes de fixation (48, 54) sont d'une configuration en forme de crochet, la tête de fixation (48) prévue sur la partie inférieure de carter (4) présentant un talon de verrouillage (56), qui dépasse de la surface d'appui (50) et fait saillie en direction de la partie inférieure de carter (4), et/ou la tête de fixation (54) prévue sur le couvercle de carter (6) présentant un talon de verrouillage (56), qui dépasse de la surface d'appui (50) et fait saillie en direction du couvercle de carter (6).

9. Dispositif de chauffage électrique selon l'une des revendications 1 à 3, **caractérisé par** plusieurs têtes de verrouillage (76, 78) et un coulisseau de verrouillage (70), les têtes de verrouillage (76, 78) pouvant traverser des ouvertures d'insertion (72) évidées dans le coulisseau de verrouillage (70) et/ou dans la partie inférieure de carter (4) ou respectivement dans le couvercle de carter (6), et pouvant être introduites, par coulissement du coulisseau de verrouillage (70), dans des ouvertures de verrouillage (76) se raccordant au ouvertures d'insertion (72).

10. Dispositif de chauffage électrique selon la revendication 9, **caractérisé en ce que** les têtes de verrouillage (76, 78) présentent une protubérance de verrouillage (82) dépassant de la surface d'appui (50), et **en ce que** l'ouverture de verrouillage (74) est adaptée à la tête de verrouillage (76, 78) associée, de manière telle que la protubérance de verrouillage (82) surmonte l'ouverture de verrouillage (74) lorsque la tête de verrouillage (76, 78) est logée dans l'ouverture de verrouillage (74).

11. Dispositif de chauffage électrique selon la revendication 9 ou la revendication 10, **caractérisé en ce qu'**entre l'ouverture d'insertion (72) et l'ouverture de verrouillage (74) associée, il est prévu une proéminence ou un mentonnet d'encliquetage (80) en saillie.

12. Dispositif de chauffage électrique selon l'une des revendications 4 à 11, **caractérisé en ce que** l'élément de liaison par complémentarité de formes (60, 90) allongé, ou le coulisseau de verrouillage (70), s'étend parallèlement à la surface extérieure (3) du carter (2).

13. Dispositif de chauffage électrique selon l'une des revendications 4 à 12, **caractérisé en ce que** l'élément de liaison par complémentarité de formes (60, 90) allongé, ou le coulisseau de verrouillage (70), s'appuie sur la surface extérieure (3) du carter (2).

14. Dispositif de chauffage électrique selon l'une des revendications précédentes, **caractérisé en ce que** le couvercle de carter (6) forme une bordure (42), qui entoure de manière périphérique un compartiment de raccordement (30) s'ouvrant vers les ailettes de chauffage (18), et sur laquelle repose un couvercle de compartiment de raccordement (44).
